# EUROPÄISCHE PATENTANMELDUNG

(11) **EP 1 422 440 A1**
(43) Veröffentlichungstag der Anmeldung: **26.05.2004**
(21) Anmeldenummer: 03025630.9
(22) Anmeldetag: 06.11.2003
(51) Int. Cl.: F16F 15/00, F01D 25/06, F01D 5/26

(54) **Schwingungsdämpfungsvorrichtung sowie Verfahren zur Schwingungsdämpfung zur aktiven Dämpfung von Schwingungen eines Bauteils**

(30) Priorität: 25.11.2002 DE 10255009
(71) Anmelder: Rolls-Royce Deutschland Ltd & Co KG, 15827 Dahlewitz (DE)
(72) Erfinder: Schreiber, Karl, 15806 Mellense (DE); Grothaus, Raimund, East -4D GmbH, 01324 Dresden (DE)
(74) Vertreter: Weber, Joachim, Dr.

(57) **Zusammenfassung**

Die Erfindung bezieht sich auf eine Schwingungsdämpfungsvorrichtung und ein Verfahren zur aktiven Dämpfung von Schwingungen eines Bauteils (1) mit zumindest einem auf das Bauteil (1) aufgebrachten Piezo-Element, dadurch gekennzeichnet, dass die Piezo-Elemente (2a; 2b) mit einer elektrischen Schaltung (3) verbunden sind, welche zur Aufnahme der bei einer Schwingung des Bauteils (1) durch die Verformung eines Sensorelementes induzierten Messsignals, zur Verarbeitung des Messsignals und zur Rückleitung eines phasenversetzten Stroms an die Piezo-Elemente (2a; 2b) ausgebildet sind.

## Beschreibung

Die Erfindung bezieht sich auf eine Schwingungsdämpfungsvorrichtung sowie auf ein Verfahren zur aktiven Schwingungsdämpfung gemäß den Oberbegriffen der beiden unabhängigen Ansprüche.

Im Einzelnen bezieht sich die Erfindung auf eine Schwingungsdämpfungsvorrichtung mit zumindest einem auf das Bauteil aufgebrachten Piezo-Element.

Aus dem Stand der Technik ist es bekannt, dass insbesondere bei Flugtriebwerken und Gasturbinen Schwingungen an unterschiedlichsten Bauteilen auftreten. Diese führen zum einen zu einer unerwünschten Geräuschentwicklung, zum anderen wird die Lebensdauer des Bauteils in ungewünschter Weise verkürzt.

Insbesondere bei Fan Blades und/oder Turbinenschaufeln von Turbotriebwerken stellt die aerodynamische Anregung von Schwingungen ein Problem dar. Dieses wird durch den Stand der Technik auf unterschiedlichste Weise angegangen, zufriedenstellende Lösungen existieren jedoch nicht oder nur teilweise.

Das Hauptproblem liegt, wie bereits angesprochen, darin, dass derartige Schwingungen zusätzlich zu einer ungünstigen Beeinflussung der Aerodynamik auch die Lebensdauer der Bauteile durch Ermüdungsschädigung verkürzen. Die Lebenszeitverkürzung betrifft dabei sowohl die Schaufeln als auch die Scheiben, an denen diese aufgehängt sind. Das Problem der Ermüdungsschädigung wird um so größer, je größer die Längenerstreckung oder Dimensionierung des Bauteils ist, da dieses mit zunehmender Länge biegeschlaffer wird.

Aus dem Stand der Technik ist es bekannt, zur Schwingungsdämpfung so genannte Snubber einzusetzen, welche sich jedoch aerodynamisch als ungünstig erweisen und zusätzlich eine Reihe mechanischer Nachteile mit sich bringen, und aus diesem Grunde bei Triebwerken modernster Bauart nicht mehr verwendet werden.

Aus aerodynamischer Sicht haben sich bei modernen Triebwerken so genannte Widecord Fans durchgesetzt, die ohne Snubber ausgebildet sind. Typische Bauweisen hierfür sind massiv geschmiedete Titan-Schaufeln oder auch superplastisch hergestellte Hohlschaufeln. Beide Bauarten derartiger Schaufeln weisen ein sehr stark eingeschränktes Eigendämpfungsverhalten auf, so dass das Problem der Dämpfung von Schwingungen weiterhin besteht.

Eine weitere, aus dem Stand der Technik bekannte Lösung zeigt die EP 0 926 312 A2. Hierbei werde elastomere Werkstoffe in Taschen der Schaufel eingesetzt, um die Dämpfung zu verbessern. Nachteilig erweist sich der komplizierte Aufbau der Schaufeln sowie die sich ergebende verringerte mechanische Festigkeit.

In der US 6 299 410 B1 wird vorgeschlagen, einen Energieumwandler einzusetzen, der mechanische Energie in elektrische Energie umwandelt, und diese elektrische Energie an der Außenseite des Bauteils abzuführen. Hierzu werden Piezo-Elemente aufgebracht. Der bei deren Verformung induzierte elektrische Strom wird durch geeignete elektrische Widerstände in Wärme umgewandelt. Die Anregung der Piezo-Elemente erfolgt durch deren Längenänderungen bei auftretenden Schwingungen der Schaufel bzw. des Bauteils. Als nachteilig erweist sich bei dieser Lösung zum einen der nur sehr geringe Wirkungsgrad und zum anderen eine beispielhafte Anordnung der piezoelektrischen Elemente im Fußbereich der Schaufel. Da letzterer höchsten mechanischen Beanspruchungen unterliegt, erfolgt eine zusätzliche Schwächung der Schaufel.

Der Erfindung liegt die Aufgabe zugrunde, eine Schwingungsdämpfungsvorrichtung sowie ein Verfahren der Eingangs genannten Art zu schaffen, welche bei einfachem Aufbau und einfacher, kostengünstiger Anwendbarkeit eine zuverlässige Dämpfung von Schwingungen von Bauteilen ermöglichen.

Erfindungsgemäß wird die Aufgabe durch die Merkmalskombinationen der beiden nebengeordneten Ansprüche gelöst, die Unteransprüche zeigen weitere vorteilhafte Ausgestaltungen der Erfindung.

Erfindungsgemäß ist somit vorgesehen, dass das Piezo-Element mit einer elektronischen Schaltung verbunden ist, welche zur Aufnahme der bei einer Schwingung des Bauteils durch die Verformung des als Sensor wirkenden Piezo-Elements induzierten Stroms zur Verarbeitung des Stromsignals und Zurückleitung eines phasenversetzten Stroms an das Piezo-Element ausgebildet ist.

Hinsichtlich dieses Verfahrens ist somit vorgesehen, dass die bei einer Verformung des Bauteils erzeugten Ströme der elektronischen Schaltung zugeleitet, von dieser verarbeitet und phasenversetzt dem Piezo-Element rückgeführt werden.

Das zumindest eine erfindungsgemäß vorgesehene Piezo-Element wirkt somit alternierend sowohl als Sensor als auch als Aktuator. Die zugrundeliegende Idee besteht somit darin, eine aktive Schwingungsdämpfung vorzusehen, durch welche Gegenkräfte auf das Bauteil aufgebracht werden, die einer Verformung des Bauteils durch die auftretenden, induzierten Schwingungen entgegenwirkt.

Erfindungsgemäß werden bevorzugter Weise so genannte PZT-Elemente (Blei Zirkon Titanat) verwendet, die aus dünnen Folien in Streifenform ausgestaltet sind und eine ausgeprägte Wirkungsrichtung haben. Es ergibt sich somit eine unidirektionale Wirkweise bei einer sehr dünnen Bauweise der Piezo-Elemente. Aus diesem Grunde sind diese gut aufgekrümmten schwingungszudämpfende aerodynamischen Bauteile aufbringbar.

Durch die erfindungsgemäß vorgesehene Doppelwirkung der Piezo-Elemente (einmal als Sensor und einmal als Aktuator) ergibt sich eine Verdoppelung des Wirkungsgrades der Piezo-Elemente).

Bei einer Anwendung der erfindungsgemäßen Schwingungsdämpfungsvorrichtung sowie des erfindungsgemäßen Verfahrens bei Schaufeln von Gasturbinen ist es besonders vorteilhaft, wenn die Piezo-Elemente an der Saugseite der Schaufel aufgebracht werden. Hierdurch sind die Piezo-Elemente erosionsgeschützt und stören nicht oder nur unwesentlich die aerodynamische Wirkung der Schaufel.

Da es erfindungsgemäß nicht in jedem Fall erforderlich ist, externe Energie zuzuführen, kann die Schwingungsdämpfungsvorrichtung als vollkommen autonom funktionsfähiges Element eingesetzt werden. Sie kann beispielsweise zusammen mit der elektronischen Schaltung in eine Schaufel integriert werden, so dass jede einzelne Schaufel mit einer eigenen Schwingungsdämpfungsvorrichtung versehen ist, die ein integraler Bestandteil der Schaufel selbst ist.

Die elektronische Schaltung, welche bevorzugter Weise aus einem Messverstärker, einem adaptiven oder nicht adaptiven Regler und einem Leistungsverstärker besteht, kann somit in geeigneter Weise an der Schaufel befestigt werden, beispielsweise in einer Ausnehmung oder einem Hohlraum der Schaufel oder als Anbauteil unterhalb des Schaufelfußes.

Die erforderliche Stromversorgung der erfindungsgemäßen Schwingungsdämpfungsvorrichtung erfolgt bei der beschriebenen autonomen Bauweise aus dem induzierten Strom bei beginnender Schwingung der Schaufel. Eine gewisse Schwingungsamplitude der Schaufel ist dabei zulässig, ohne die Lebensdauer der Schaufel oder der Scheibe nennenswert zu beeinflussen. Die elektronische Schaltung ist so aufgebaut, dass zunächst die Frequenzen gemessen werden und dass dann die induzierten Ströme 180° phasenverschoben dem oder den Piezoelementen direkt oder verstärkt zurückgeleitet werden. Hierdurch wird der Schwingungsbewegung der Schaufel entgegengewirkt. Hieraus ergibt sich, dass bei zunehmender Größe der Schwingungsamplitude die Dämpfung größer wird.

Die erfindungsgemäße Schwingungsdämpfungsvorrichtung sowie das zugehörige Verfahren können bei unterschiedlichsten Bauelementen oder Bauteilen eingesetzt werden.

Im Rahmen von Gasturbinen ist die Anwendung sowohl bei Compositfanblades, bei welchen die Piezo-Elemente vorteilhafter Weise ins Composite integriert werden können, wie auch bei bestehenden oder zukünftigen metallischen Fanblades möglich. Bei der Anwendung in metallischen Massivoder Hohlschaufeln ist es denkbar, Vertiefungen in mechanisch nicht hoch belastete Bereiche auf der Schaufelsaugseite einzubringen, in denen sowohl die Piezo-Elemente als auch die notwendigen Verkabelungen untergebracht werden können, ohne die Aerodynamik zu beeinflussen.

Im Rahmen der Erfindung ist es auch möglich, sowohl das Verfahren als auch die Schwingungsdämpfungsvorrichtung so auszubilden, dass sich eine nicht-autonome Bauweise ergibt, bei der eine zusätzliche Dämpfung durch äußere Energiezufuhr möglich ist. Dies gilt sowohl für den Regelprozess als auch für die aktive Dämpfung selbst.

Die Erfindung selbst ist, wie erwähnt, nicht nur bei Schaufeln von Gasturbinen-Triebwerken, sondern auch bei, sämtlichen anderen schwingungsgefährdeten Bauteilen, wie etwa Gehäusebereichen oder Ähnlichem einsetzbar.

Im Folgenden wird die Erfindung anhand von Ausführungsbeispielen in Verbindung mit der Zeichnung beschrieben. Dabei zeigt:
- Fig. 1: eine schematische Teil-Ansicht einer erfindungsgemäß mit einer Schwingungsdämpfungsvorrichtung versehenen Schaufel,
- Fig. 2: eine vergrößerte Teil-Schnittansicht, in vereinfachter Darstellung, des Teilbereiches Z von Figur 1,
- Fig. 3: eine Schnittansicht einer abgewandelten Ausgestaltungsform analog Figur 2,
- Fig. 4: eine schematische Darstellung von Schaufelfüßen zur Unterbringung der elektrischen Schaltung, und
- Fig. 5: ein weiteres Anwendungsbeispiel der erfindungsgemäßen Schwingungsdämpfungsvorrichtung, an einen sogenannten Bypass Duct - dem äußeren Triebwerkgehäuse.

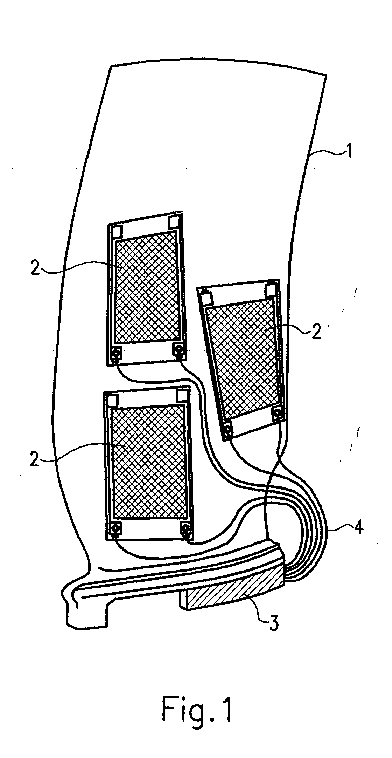

Die Fig. 1 zeigt in schematischer Darstellung eine Teilansicht eines Bauteils 1 in Form einer Schaufel einer Gasturbine. Auf dieser sind mehrere Piezo-Elemente 2a; 2b (z.B. LaRC-MFC) befestigt (allgemein mit 2 bezeichnet), die über Anschlussleitungen 4 mit einer elektrischen Schaltung 3 verbunden sind. Diese ist am Fußbereich des Bauteils 1 befestigt.

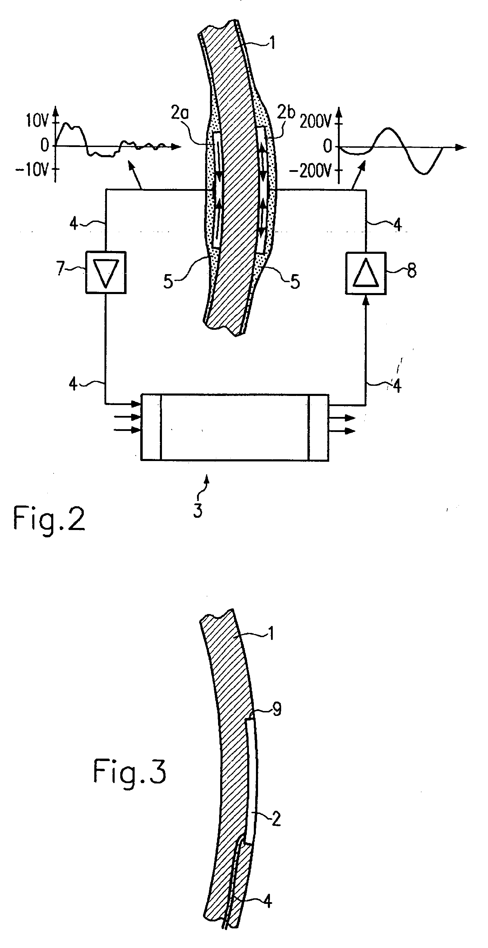

Die Fig. 2 zeigt in vergrößerter, schematischer Darstellung einen Teilbereich des erfindungsgemäß ausgerüsteten Bauteils 1. Hierbei ist zu erkennen, dass beidseitig des Bauteils 1 (Schaufel) jeweils Piezo-Elemente 2a; 2b befestigt sind. Diese sind in eine Schutzschicht 5 eingebettet, die die Oberfläche des Bauteils 1 bedeckt. Entsprechend sind auch die nur schematisch dargestellten Anschlussleitungen 4 zumindest teilweise in der Schutzschicht 5 aufgenommen.

Die elektrische Schaltung 3 umfasst bei der nicht autonomen Bauweise in der Zuleitung zumindest einen Messverstärker 7, sowie zumindest einen Leistungsverstärker 8 in der Rückleitung. Weiterhin ist im Bereich der elektrischen Schaltung 3 ein adaptiver Regler vorgesehen, welcher auch mehrkanalig ausgebildet sein kann. Bei der Schemadarstellung der Fig. 2 dient das linke Piezo-Element 2a als Sensor, während das rechte Piezo-Element 2b als Aktuator dient. Es versteht sich, dass erfindungsgemäß jedes der Piezo-Elemente sowohl Sensor als auch Aktuator sein kann. Insofern ist die dargestellte Schaltung der Fig. 2 nur schematisch und dient nur zur Verdeutlichung des Grundprinzips.

Die Fig. 3 zeigt einen Teil des in Fig. 1 schematisch dargestellten Bauteils 1. Dabei ist eine Vertiefung 9 vorgesehen, in welcher sowohl die Piezo-Elemente 2a; 2b als auch dessen Anschlussleitungen 4 aufgenommen sind, so dass die Aerodynamik nicht beeinträchtigt wird.

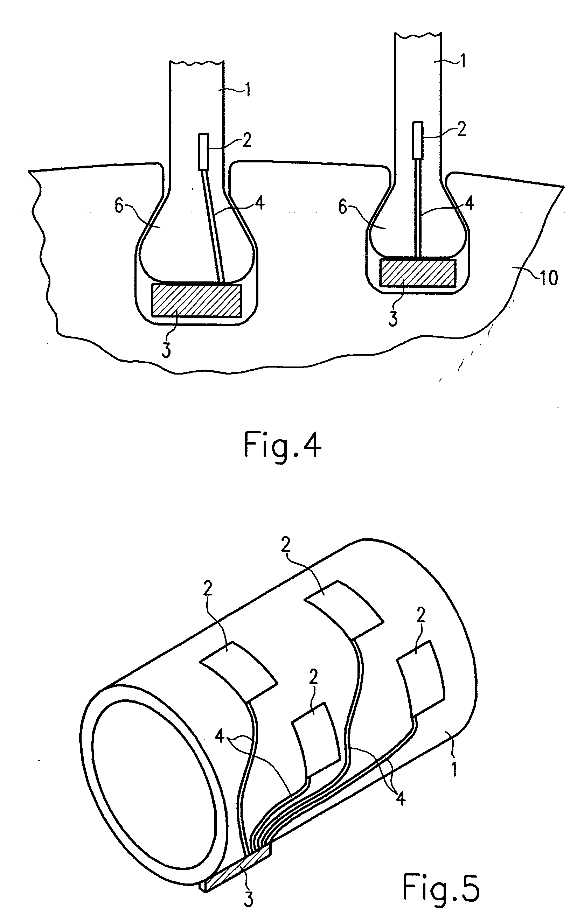

Die Fig. 4 zeigt in vereinfachter Darstellung einen Teilbereich einer Fan-Scheibe 10, in welchen Schaufelfüße 6 der Schaufeln 1 (Bauteile) eingesetzt sind. Es ergibt sich, dass unterhalb der Schaufelfüße 6 konstruktiv ein Hohlraum vorhanden ist, in welchen die elektronische Schaltung 3 eingebracht werden kann.

Die Fig. 5 zeigt in schematischer Darstellung ein weiteres Anwendungsbeispiel der erfindungsgemäßen Schwingungsdämpfungsvorrichtung, beispielsweise bei einem Bypass Duct. Das zylindrische Bauteil 1 ist an seinem Umfang mit mehreren Piezo-Elementen 2a; 2b versehen, die entsprechend mit einer elektrischen Schaltung 3 versehen sind. Erfindungsgemäß ergibt sich somit, dass entweder jedes der Piezo-Elemente 2 mit einer eigenen elektrischen Schaltung versehen sein kann oder dass es möglich ist, mehrere Piezo-Elemente mit einer einzigen elektronischen Schaltung zu betreiben.

### Bezugszeichenliste

- 1: Bauteil
- 2: Piezo-Element
- 2a: Piezo-Element links
- 2b: Piezo-Element rechts
- 3: elektronische Schaltung
- 4: Anschlussleitung
- 5: Schutzschicht
- 6: Schaufelfuß
- 7: Messverstärker
- 8: Leistungsverstärker
- 9: Vertiefung
- 10: Fan-Scheibe

## Patentansprüche

1. Schwingungsdämpfungsvorrichtung zur aktiven Dämpfung von Schwingungen eines Bauteils (1) mit zumindest einem auf das Bauteil (1) aufgebrachten Piezo-Element (2a; 2b), **dadurch gekennzeichnet, dass** die Piezo-Elemente (2a; 2b) mit einer elektronischen Schaltung (3) verbunden sind, welche zur Aufnahme der bei einer Schwingung des Bauteils (1) durch die Verformung eines Sensorelements induzierten Messsignal, zur Verarbeitung des Messsignals und zur Rückleitung eines phasenversetzten Stroms an die Piezo-Elemente (2a; 2b) ausgebildet sind.

2. Vorrichtung nach Anspruch 1, **dadurch gekennzeichnet, dass** die Piezo-Elemente (2a; 2b) in Form eines PZT-Elements flächig und streifenförmig ausgebildet sind.

3. Vorrichtung nach Anspruch 1 oder 2, **dadurch gekennzeichnet, dass** die Piezo-Elemente (2a; 2b) flächig ausgebildet sind.

4. Vorrichtung nach einem der Ansprüche 1 bis 3, **dadurch gekennzeichnet, dass** die Piezo-Elemente (2a; 2b) und elektrische Anschlussleitungen (4) durch eine auf einer Oberfläche des Bauteils (1) aufgebrachte Schutzschicht (5) abgedeckt sind.

5. Vorrichtung nach einem der Ansprüche 1 bis 4, **dadurch gekennzeichnet, dass** das Bauteil (1) eine Schaufel einer Gasturbine ist.

6. Vorrichtung nach Anspruch 5, **dadurch gekennzeichnet, dass** die Piezo-Elemente (2a; 2b) an einer Saugseite der Schaufel befestigt sind.

7. Vorrichtung nach einem der Ansprüche 5 oder 6, **dadurch gekennzeichnet, dass** die elektrische Schaltung (3) im Bereich eines Schaufelfußes (6) angeordnet ist.

8. Vorrichtung nach einem der Ansprüche 1 bis 7, **dadurch gekennzeichnet, dass** die elektrische Schaltung (3) mit einer externen Energiequelle verbunden ist.

9. Verfahren zur aktiven Schwingungsdämpfung eines Bauteils (1), wobei auf dem Bauteil (1) zumindest ein Piezo-Element aufgebracht ist, **dadurch gekennzeichnet, dass** die bei einer Verformung des Bauteils (1) erzeugten Ströme einer elektrischen Schaltung (3) zugeleitet, von dieser verarbeitet und phasenversetzt dem Piezo-Element rückgeführt werden.

10. Verfahren nach Anspruch 9, **dadurch gekennzeichnet, dass** keine externe Energiezufuhr erfolgt.

11. Verfahren nach Anspruch 9, **dadurch gekennzeichnet, dass** zusätzlich eine externe Energiezufuhr erfolgt.
